# EUROPÄISCHE PATENTSCHRIFT

(11) **EP 1 868 393 B1**
(45) Veröffentlichungstag und Bekanntmachung des Hinweises auf die Patenterteilung: **17.10.2018**
(21) Anmeldenummer: 07011240.4
(22) Anmeldetag: 08.06.2007
(51) Int. Cl.: H04W 4/02, H04W 36/32, H04W 48/04

(54) **Steuerung von Kommunikationsverbindungen von mobilen Endgeräten in einem Mobilfunknetz**
Operation of communication connections of mobile terminals in a mobile telephone network
Commande de liaisons de communication de terminaux mobiles dans un réseau radio mobile

(30) Priorität: 14.06.2006 DE 102006027935
(43) Veröffentlichungstag der Anmeldung: 19.12.2007
(73) Patentinhaber: Vodafone Holding GmbH, 40213 Düsseldorf (DE)
(72) Erfinder: Fuchs, Jan-Harald, 40479 Düsseldorf (DE); Tebbe, Stefan, 41086 Mönchengladbach (DE)
(74) Vertreter: Weisbrodt, Bernd

(56) Entgegenhaltungen:
- US-A- 5 905 950
- US-A1- 2003 008 632
- US-B1- 6 597 912
- US-B1- 7 054 642

## Beschreibung

Die vorliegende Erfindung betrifft ein Verfahren zur Steuerung von Kommunikationsverbindungen von in einem Mobilfunknetz betreibbaren mobilen Endgeräten, mit den Merkmalen des Oberbegriffs des Anspruchs 1. Ein derartiges Verfahren ist durch die US 5,905,950 offenbart.

Gegenstand der vorliegenden Erfindung ist ferner ein Mobilfunksystem mit ein zellulares Mobilfunknetz ausbildenden Einrichtungen und darin betreibbaren mobilen Endgeräten, bei welchem die das Mobilfunknetz ausbildenden Einrichtungen und die im Mobilfunknetz betreibbaren mobilen Endgeräte zur Ausführung eines erfindungsgemäßen Verfahrens ausgebildet sind.

Die Berücksichtung des Aufenthaltsortes eines mobilen Endgerätes in einem Mobilfunknetz ist insbesondere aus dem Bereich der Vergebührung von Anrufen in Mobilfunknetzen zur nutzerindividuellen Anpassung der Gebührenstruktur für bestimmte Aufenthaltsorte bekannt, beispielsweise aus der US 5,568,153 oder der DE 197 31 461 C1. Darüber hinaus bieten Mobilfunknetzbetreiber vermehrt Lösungen an, bei denen Endgeräte in einem Mobilfunknetz ausschließlich in einem bestimmten Vorzugsgebiet nutzbar sind, insbesondere als Alternative zu in beziehungsweise an leitungsgebundenen Fernsprechnetzen, sogenannten Festnetzen, betreibbaren Endgeräten.

Die US2003/0008632 A1 schlägt hierzu die Verwendung einer intelligenten Basisstation vor, welche ohne Unterstützung durch eine Basisstationskontrolleinheit an das Vermittlungs-Subsystem angeschlossen ist. Nachteilig bei den bisher bekannten Steuerungen von Kommunikationsverbindungen in entsprechenden Mobilfunknetzen ist der Umstand, dass die in Vorzugsgebieten gegebenen eingeschränkten Mobilitätsanforderungen seitens der entsprechenden für den Aufbau, die Aufrechterhaltung und/oder den Abbau von Kommunikationsverbindungen eingesetzten Einrichtungen und Protokolle der Mobilfunknetze und/oder der mobilen Endgeräte keine Berücksichtung finden. Dabei werden bei Aufenthalt von mobilen Endgeräten in Vorzugsgebieten Ressourcen des Mobilfunknetzes, die eigentlich nicht oder nicht in dem gleichen Umfang wie bei Aufenthalt im Restgebiet des Mobilfunknetzes benötigt werden, seitens des Mobilfunknetzes ungenutzt und damit unnötig gebunden. Dementsprechend werden Mobilfunknetze hinsichtlich deren Einrichtungen weiter ausgelastet beziehungsweise müssen entsprechend umfangreicher ausgebildet beziehungsweise ausgebaut werden.

Der vorliegenden Erfindung liegt in Anbetracht dieses Standes der Technik die Aufgabe zugrunde, die Steuerung von Kommunikationsverbindungen von in einem Mobilfunknetz der eingangs genannten Art betreibbaren mobilen Endgeräten unter Meidung der beschriebenen Nachteile zu verbessern, insbesondere hinsichtlich der Auslastung des Mobilfunknetzes.

Zur technischen Lösung wird mit der vorliegenden Erfindung ein Verfahren mit den Merkmalen des Anspruchs 1 vorgeschlagen.

Ausgestaltungsformen die nicht von den Ansprüchen abgedeckt werden, sind lediglich als Beispiele zu betrachten. Der Erfindung liegt die Erkenntnis zugrunde, dass eine Verbesserung hinsichtlich der Auslastung des Mobilfunknetzes erzielbar ist, wenn bewusst eine Funktionalitätseinschränkung in der Mobilitätsverwaltung mobiler Endgeräte des Mobilfunknetzes für vorbestimmte zu identifizierende Anwendungsfälle erfolgt. Eine solche Funktionalitätseinschränkung erfolgt erfindungsgemäß vorzugsweise durch Ausschluss von Funkzellenübergabefunktionalitäten, sogenanntem Handover, in der Mobilitätsverwaltung der mobilen Endgeräte des Mobilfunknetzes, dem sogenannten Mobility Management. Der vorbestimmte zu identifizierende Anwendungsfall ist dabei insbesondere bei einem stationären beziehungsweise quasi stationären Betrieb eines mobilen Endgerätes im Mobilfunknetz gegeben, wie er insbesondere bei Aufenthalt von mobilen Endgeräten in einem für diese seitens des Mobilfunknetzes eingerichteten Vorzugsgebiet gegeben ist. Eine erfindungsgemäß bewusst vorgenommene Funktionalitätseinschränkung in der Mobilitätsverwaltung mobiler Endgeräte des Mobilfunknetzes führt vorteilhafterweise zu einer verringerten System- beziehungsweise Netzleistungsanforderung des Mobilfunknetzes beziehungsweise dessen Einrichtungen und somit zu einem geringeren Investitionsvolumen für selbiges.

Erfindungsgemäß ist vorgesehen, dass bei einem Aufbau einer Kommunikationsverbindung wenigstens einer wenigstens eine Funkzelle des Vorzugsgebietes ausbildenden Basisstation des Mobilfunknetzes eine Kennung signalisiert wird und seitens der Basisstation anhand der Kennung eine Weitervermittlung, ein sogenanntes Routing, der Kommunikationsverbindung erfolgt. Vorteilhafterweise signalisiert die Kennung der Basisstation den Aufenthalt des mobilen Endgerätes im Vorzugsgebiet.

Erfindungsgemäß ist die Kennung seitens der Basisstation erfasst und die erfasste Kennung wird mit der signalisierten Kennung verglichen. Vorteilhafterweise erfolgt bei Übereinstimmung der erfassten Kennung und der signalisierten Kennung eine direkte Weitervermittlung, ein sogenanntes Routing, der Kommunikationsverbindung zwischen der Basisstation und der dieser zugeordneten Vermittlungsstelle des Mobilfunknetzes. Durch diese erfindungsgemäßen Ausgestaltungen, einzeln und/oder in Kombination miteinander, wird eine Identifizierung eines Anwendungsfalls einer Funktionalitätseinschränkung in der Mobilitätsverwaltung mobiler Endgeräte des Mobilfunknetzes ermöglicht. Dem jeweiligen Netzknoten eines Mobilfunknetzes wird dabei eine Möglichkeit bereitgestellt, welche eine Unterscheidung eines Anwendungsfalls mit vollständiger Mobilitätsverwaltung
(Mobility Management) und reduzierter Mobilitätsverwaltung (Mobility Management) ermöglicht. Erfindungsgemäß wird diese Unterscheidung seitens der das Vorzugsgebiet bereitstellenden Basisstation des Mobilfunknetzes bekannt gemacht und eine entsprechende Weitervermittlung (Routing) der Kommunikationsverbindung, insbesondere für Sprache und/oder Daten, vorgenommen. Erfindungsgemäß erfolgt beim Aufbau einer Kommunikationsverbindung zur Unterscheidung eine Signalisierung durch die Kennung, vorzugsweise vom Kernnetzwerk (Core Network (CN)) an die Basisstation beziehungsweise dergleichen Netzknoten des Mobilfunknetzes.

Eine weitere vorteilhafte Ausgestaltung der Erfindung ist gekennzeichnet durch eine Nutzung von den Nutzer des mobilen Endgerätes seitens des Mobilfunknetzes identifizierenden Daten und/oder das mobile Endgerät identifizierenden Daten für die Kennung und/oder seitens der Kennung. Die erfindungsgemäße Kennung ist so vorteilhafterweise beispielsweise als Teil der sogenannten Subscriber Information im Heimatregister (Home Location Register (HLR)) des Mobilfunknetzes ausbildbar. Eine weitere vorteilhafte Ausgestaltung sieht vor, dass die Kennung immer aktiviert beziehungsweise gesetzt werden kann oder nur dann, wenn ein bestimmter Vorzugsbereich beim Aufbau der Kommunikationsverbindung mit signalisiert wird. Im Falle der Verwendung der Kennung als Teil der Subscriber Information ist die Funktionalitätseinschränkung in der Mobilitätsverwaltung (Mobility Management) vorteilhafterweise unabhängig von der Basisstation beziehungsweise der von dieser ausgebildeten Funkzelle immer eingeschränkt, wenn der Nutzer eine Kommunikationsverbindung aufbaut. Sollte der Nutzer dann die Funkzelle des Vorzugsgebietes beziehungsweise den Bereich der Funkzellen seiner Vorzugsgebiete wechseln, wird die Kommunikationsverbindung vorteilhafterweise abgebrochen. In einer weiteren Ausgestaltung wird die erfindungsgemäße Funktionalitätseinschränkung in der Mobilitätsverwaltung (Mobility Management) nur dann vorgenommen, wenn der Nutzer sich in einem Vorzugsgebiet beziehungsweise -bereich aufhält. Bei einem Wechsel des Vorzugsgebiets beziehungsweise -bereichs würde eine entsprechende Kommunikationsverbindung dann automatisch abgebrochen beziehungsweise beendet.

Die erfindungsgemäße Kennung signalisiert seitens des Mobilfunknetzes, insbesondere seitens der jeweiligen Basisstation in der das mobile Endgerät sich aufhält, die Subskription des Nutzers des mobilen Endgerätes, welcher beziehungsweise welche vorteilhafterweise identifiziert wird durch die dem Nutzer seitens des Mobilfunknetzes identifizierenden Daten, vorzugsweise die sogenannte MSISDN und IMSI (MSISDN: Mobile Subscriber ISDN Number; ISDN: Integrated Services Digital Network; IMSI: International Mobile Subscriber Identity). Die Kennung ist dabei seitens des Mobilfunknetzes mit einer Funktionalitätseinschränkung in der Mobilitätsverwaltung mobiler Endgeräte des Mobilfunknetzes verknüpft. Erfindungsgemäß ist eine entsprechende Identifizierung einer Einschränkung in der Funktionalität der Mobilitätsverwaltung (Mobility Management) durch die das mobile Endgerät identifizierende IMEI (IMEI: International Mobile Equipment Identity) realisiert.

In einer weiteren vorteilhaften Ausgestaltung der Erfindung wird nach einem Aufbau einer Kommunikationsverbindung wenigstens ein Kommunikationsparameter der Kommunikationsverbindung bestimmt, anhand dessen wenigstens eine Information hinsichtlich des Aufenthalts des mobilen Endgerätes in dem wenigstens einen Vorzugsgebiet ermittelbar ist. Erfindungsgemäß wird so nach einem Verbindungsaufbau eine Überprüfung zur Unterscheidung eines Anwendungsfalls mit eingeschränkter oder vollständiger Mobilitätsverwaltung (Mobility Management) bereitgestellt. Vorteilhafterweise wird dabei seitens der Basisstation ein zulässiger Wertebereich des Kommunikationsparameters für die Kommunikationsverbindung erfasst und überprüft, ob der bestimmte Kommunikationsparameter der Kommunikationsverbindung in dem zulässigen Wertebereich des Kommunikationsparameters für die Kommunikationsverbindung liegt. Vorteilhafterweise wird bei positiver Überprüfung die Kommunikationsverbindung aufrechterhalten. Eine weitere vorteilhafte Ausgestaltung der Erfindung sieht vor, dass bei negativer Überprüfung, also bei einem Abweichen der ermittelten Kommunikationsparameter von den zulässigen Wertebereichen, die Kommunikationsverbindung abgebaut wird oder die Kommunikationsverbindung auf eine Kommunikationsverbindung gemäß den Bedingungen in dem Restgebiet des Versorgungsgebietes des Mobilfunknetzes geschaltet beziehungsweise abgerechnet wird. Erfindungsgemäß wird bei dieser Ausgestaltung angenommen, dass sich die Kommunikationsparameter, vorzugsweise sogenannte Round Trip Time (RTT) Parameter, bei geringer Mobilität des mobilen Endgerätes sich nur in einem geringen Maße ändern. Seitens der Basisstation oder der gleichen Netzknotens des Mobilfunknetzes wird erfindungsgemäß dazu ein Grenzwert für das Maß der Änderung der Kommunikationsparameter definiert, mit welchem dann die Unterstützung der Mobilitätsverwaltung (Mobility Management) für die Kommunikationsverbindung vollständig an- beziehungsweise abgeschaltet wird, dass heißt die Kennung die löscht beziehungsweise gesetzt wird. Für die Kommunikationsverbindung wird dann entsprechend der gelöschten beziehungsweise gesetzten Kennung die entsprechende Weitervermittlung (Routing) der Kommunikationsverbindung in der Basisstation beziehungsweise dergleichen Netzknotens des Mobilfunknetzes ausgewählt.

Gegenstand der vorliegenden Erfindung ist ferner ein Mobilfunksystem mit ein zellulares Mobilfunknetz ausbildenden Einrichtungen und darin betreibbaren mobilen Endgeräten, wobei die das Mobilfunknetz ausbildenden Einrichtungen und die darin betreibbaren mobilen Endgeräte zur Ausführung eines erfindungsgemäßen Verfahrens ausgebildet sind. Die Einrichtungen des Mobilfunknetzes, insbesondre die Basisstationen, als auch die mobilen Endgeräte selbst, sind dabei ausgebildet, eine erfindungsgemäße Kennung zu signalisieren beziehungsweise auszuwerten.

Weitere Einzelheiten, Merkmale und Vorteile der Erfindung werden nachfolgend anhand des in der Figur der Zeichnung dargestellten Ausführungsbeispiels der Erfindung näher erläutert. Dabei zeigt:

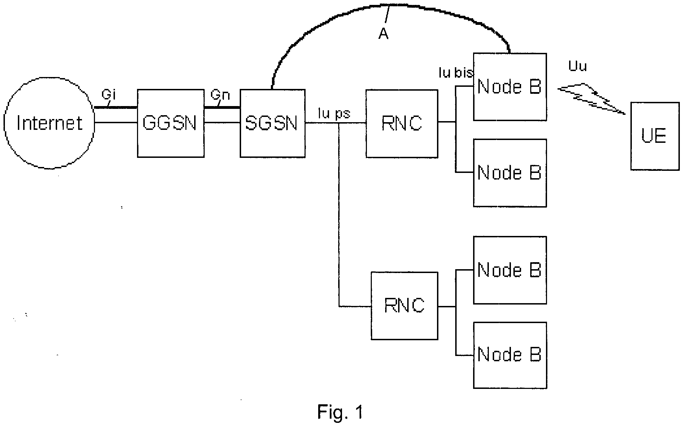

- Fig. 1: in einem Blockdiagramm ein prinzipielles Ausführungsbeispiel einer erfindungsgemäßen Steuerung von Kommunikationsverbindungen eines mobilen Endgerätes in einem Mobilfunknetz.

Fig. 1 zeigt in einem Blockdiagramm die prinzipielle Ausgestaltung eines Zugangsnetzwerks eines Mobilfunknetzes gemäß dem UMTS-Funknetzstandard (UMTS: Universal Mobile Telecommunications System), das sogenannte UTRAN (UTRAN: UMTS Terrestrial Radio Access Network). Das UTRAN übernimmt die Übertragung von Daten von Kommunikationsverbindungen zum Kernnetz (Core Network (CN)) des Mobilfunknetzes, verwaltet die Funkressourcen, realisiert die Verbindungsübergabe bei einem Zellenwechsel, das sogenannte Handover, und übernimmt das Kodieren der zur Verfügung stehenden Funkkanäle.

Die bisher im Stand der Technik in der 3GPP (3GPP 3rd Generation Partner Ship Projekt) spezifizierte UMTS-Architektur ermöglicht das Angebot von sämtlichen Trägerdiensten mit einer maximalen Mobilität der im Mobilfunknetz betriebenen mobilen Endgeräte UE (UE: User Equipment). Dabei ermöglicht die vollständig implementierte Mobilitätsverwaltung (Mobility Management) alle Verbindungsübergabeszenarien (Handover-Szenarien), beispielsweise zwischen 2G/3G-Access-Technologien, innerhalb oder über die Grenzen eines Bereiches einer Basis- beziehungsweise Bodenstation des Mobilfunknetzes eines sogenannten RNC-Bereiches (RNC: Radio Network Controller), mit oder ohne bestehende Verbindung zwischen den mobilen Endgerät UE und dem Kernnetzwerk CN. An ein RNC sind dabei mehrere Basisstationen Node B untergeordnet angeschlossen. Ein RNC bildet zusammen mit den an diesem angeschlossenen Basisstationen Node B das sogenannte Radio Network Subsystem (RNS). Das RNC überwacht dabei die Funkverbindungen im Mobilfunknetz gemäß dem UMTS-Funknetzstandard. Dabei verwaltet das RNC Codes für die Datenübertragungsverfahren einer Kommunikationsverbindung und regelt dabei insbesondere die Funkzugriffe durch Verwaltung der Codes für die einzelnen Funkkanäle wobei insbesondere CDMA beziehungsweise WCDMA (CDMA: Code Division Multiple Access; WCDMA: Wide Code Division Multiple Access) zum Einsatz kommen.

Die Mobilitätsverwaltung (Mobility Management) auf Funkzellenebene, dass heißt bei bestehender dezidierter Verbindung zwischen dem mobilen Endgerät UE und dem UTRAN, übernimmt das UTRAN das sogenannte Radio Interface Mobility Management. Dies erfolgt bisher gemäß den Standards der 3GPP 25.401 Release 99, Version 3.10.0. In den Fällen, in denen eine solche dezidierte Verbindung zwischen dem UTRAN und dem mobilen Endgerät UE nicht besteht, wird die Mobilitätsverwaltung beispielsweise mit Hilfe von Registrationsprozeduren direkt zwischen dem mobilen Endgerät UE und dem Kernnetzwerk CN außerhalb der Zugriffsebene (Access-Ebene) ermöglicht.

Das bisher bekannte UTRAN gemäß der 3GPP-Spezifikation sieht eine gesonderte Behandlung von stationär beziehungsweise quasi stationär genutzten mobilen Endgeräten UE seitens des Mobilfunknetzes, insbesondere in vorbestimmten beziehungsweise fest definierten Vorzugsgebieten, nicht vor. Dementsprechend durchläuft der im Rahmen einer Kommunikation anfallende Datenverkehr bei stationär beziehungsweise quasi stationär genutzten mobilen Endgeräten im Mobilfunknetz die gesamte UTRAN-Infrastruktur, insbesondere einschließlich der RNC.

Bei der in Fig. 1 dargestellten erfindungsgemäßen UTRAN-Infrastruktur wird für stationär beziehungsweise quasi stationär genutzte mobile Endgeräte UE eine Kommunikationsverbindung gezielt unter Ausschluss von Funkzellenübergabefunktionalitäten (Handover) der Mobilitätsverwaltung mobiler Endgeräte (Mobility Management) des Mobilfunknetzes durchgeführt. Dabei erfolgt eine direkte Weitervermittlung (Routing) zwischen den Basisstationen Node B des Mobilfunknetzes und dem Kernnetz CN des Mobilfunknetzes, vorliegend durch eine direkte Verbindung zwischen der Basisstation Node B und dem sogenannten SGSN (SGSN: Serving GPRS Support Node; GPRS: General Packet Radio Service) über die in Fig. 1 mit A gekennzeichnete Direktverbindung zwischen Node B und SGSN. Durch das so gegebene direkte Routing zwischen Node B und dem Kernnetz CN werden dem stationären beziehungsweise quasi stationären Anwendungsfall mobiler Endgeräte UE im Mobilfunknetz im Mobilfunknetzwerk selbst Ressourcen eingespart, vorliegend insbesondere Ressourcen hinsichtlich der RNCs, was insbesondere zu einem geringeren RNC-Aufbau seitens des Mobilfunknetzes und damit zur Kosteneinsparung führt.

Zur Erkennung des jeweiligen Anwendungsfalls eines stationären beziehungsweise quasi stationären mobilen Endgerätes UE von einer normalen Mobilität eines mobilen Endgerätes UE im Mobilfunknetz wird erfindungsgemäß beim Aufbau einer Kommunikationsverbindung zwischen der wenigstens eine Funkzelle ausbildenden Basisstation Node B des Mobilfunknetzes und dem mobilen Endgerät UE eine Kennung signalisiert, anhand der die Basisstation Node B erkennt, dass das mobile Endgerät UE sich in einem für dieses seitens des Mobilfunknetzes eingerichteten Vorzugsgebiets befindet. Erfindungsgemäß erfolgt dann seitens der Basisstation Node B eine Weitervermittlung (Routing) der Kommunikationsverbindung unter Ausschluss der Funkzellenüberfunktionalitäten (Handover) unter Nutzung der RNC-Ressourcen der Mobilitätsverwaltung mobiler Endgeräte im Mobilfunknetz. Die dabei zwischen dem mobilen Endgerät UE und der Basisstation Node B über die Luftschnittstelle Uu übermittelte Kennung, welche vorliegend vom mobilen Endgerät UE im Rahmen der Verbindung mit der Basisstation Node B dieser signalisiert wird, wird seitens der Basisstation Node B je nach Anwendungsfall eine direkte Weitervermittlung (Routing) in das Kernnetz (CN) entsprechend der in Fig. 1 mit A beziehungsweise Gn und Gi gekennzeichnete Verbindung mit eingeschränkter Mobilität des mobilen Endgerätes UE ins Internet vollzogen, oder aber eine Kommunikationsverbindung über den die vollständigen Ressourcen des UTRAN nutzenden Einrichtungen und Verbindungen, insbesondere über die RNC, vollzogen.

Die zwischen dem mobilen Endgerät UE und der Basisstation Node B signalisierte Kennung dient dabei zur Unterscheidung eines stationären beziehungsweise quasi stationären Anwendungsfalls des mobilen Endgerätes UE im Mobilfunknetz, insbesondere bei Aufenthalt in einem Vorzugsgebiet beziehungsweise außerhalb des Vorzugsgebiets im Restgebiet des Mobilfunknetzes. Die Unterscheidung erfolgt dabei vorteilhafterweise zum einen beim Verbindungsaufbau und zum anderen nach dem Verbindungsaufbau, insbesondere um mobilfunknetzseitig feststellen zu können, ob sich das mobile Endgerät UE noch immer im stationären beziehungsweise quasi stationären Anwendungsfall, also innerhalb eines für dieses seitens des Mobilfunknetzes vorgesehenen Vorzugsgebiets, befindet oder nicht. Nach dem Verbindungsaufbau werden dazu vorteilhafterweise Kommunikationsparameter wie sogenannte Round Trip Time Parameter (RTT-Parameter) seitens der Basisstation Node B erfasst. In der Basisstation Node B ist dabei ein Grenzwert für das Maß einer Änderung der Kommunikationsparameter definiert, welcher ein Unterscheidungskriterium für den jeweiligen Anwendungsfall einer Weitervermittlung (Routing) bereitstellt.

Das in der Fig. der Zeichnung dargestellte und im Zusammenhang mit dieser beschriebene Ausführungsbeispiel der Erfindung dient lediglich zur Erläuterung der Erfindung und ist für diese nicht beschränkend.

### Bezugszeichenliste:

- A: Direktverbindung zwischen Basisstation und Kernnetzwerk des Mobilfunknetzes
- Node B: Basisstation Mobilfunknetz
- RNC: Radio Network Controller (Steuereinrichtung des Mobilfunknetzes)
- SGSN: Serving GPRS Support Node (Vermittlungsnetzeinrichtung des Mobilfunknetzes)
- GGSN: Gateway GPRS Support Node (Übergangseinrichtung/Schnittstelle an paketorientiertes Netz (Internet))
- Gi: GPRS Interface (Schnittstelle zwischen GGSN und PDN (Public Data Network), vorliegend dem Internet)
- Gn: GPRS Interface (Schnittstelle zwischen GPRS Support Nodes; vorliegend zwischen GGSN und SGSN)
- Uu: UMTS Rair Interface (Schnittstelle zwischen UTRAN und mobilem Endgerät UE (User Equipment))
- lu: Schnittstelle zwischen RNC und SGSN beziehungsweise RNC und Vermittlungseinrichtung Node B

## Patentansprüche

1. Verfahren zur Steuerung von Kommunikationsverbindungen von in einem Mobilfunknetz gemäß UMTS Funknetzstandard betreibbaren mobilen Endgeräten (UE), wobei das Mobilfunknetz wenigstens ein Versorgungsgebiet mit einer aus Funkzellen aufgebauten zellularen Netzstruktur aufweist, das Versorgungsgebiet für wenigstens ein mobiles Endgerät (UE) in wenigstens ein Vorzugsgebiet und ein Restgebiet aufgeteilt wird und bei Aufenthalt des mobilen Endgerätes (UE) in dem wenigstens einen Vorzugsgebiet für Kommunikationsverbindungen eine Nutzung von wenigstens einem Dienst ermöglicht wird, welche von einer bei Aufenthalt des mobilen Endgerätes (UE) im Restgebiet für Kommunikationsverbindungen ermöglichten Nutzung von Diensten abweicht,
**dadurch gekennzeichnet, dass** bei Aufenthalt des mobilen Endgerätes (UE) in dem
Vorzugsgebiet eine Kommunikationsverbindung unter Ausschluss von Radionetzwerkkontrolleur- (RNC) Ressourcen nutzenden Funkzellenübergabefunktionalitäten einer Mobilitätsverwaltung mobiler Endgeräte des Mobilfunknetzes erfolgt,
und
dass bei einem Aufbau einer Kommunikationsverbindung wenigstens einer wenigstens eine Funkzelle des Vorzugsgebietes ausbildenden Basisstation (Node B) des Mobilfunknetzes eine Kennung durch das mobile Endgerät (UE) signalisiert wird und seitens der Basisstation (Node B) anhand der Kennung eine Weitervermittlung der aufzubauenden Kommunikationsverbindung erfolgt, wobei eine Kennung des Vorzugsgebietes seitens der Basisstation (Node B) erfasst ist und die erfasste Kennung mit der signalisierten Kennung verglichen wird, und bei Übereinstimmung der erfassten Kennung und der signalisierten Kennung eine direkte Weitervermittlung der aufzubauenden Kommunikationsverbindung über eine Direktverbindung (A) ohne Nutzung von RNC Ressourcen zwischen der Basisstation (Node B) und der dieser zugeordneten Vermittlungsstelle (SGSN) des Mobilfunknetzes erfolgt.

2. Verfahren nach Anspruch 1, **dadurch gekennzeichnet, dass** die Kennung der Basisstation (Node B) den Aufenthalt des mobilen Endgerätes (UE) im Vorzugsgebiet signalisiert.

3. Verfahren nach Anspruch 1 oder Anspruch 2, **gekennzeichnet durch** eine Nutzung von den Nutzer des mobilen Endgerätes (UE) seitens des Mobilfunknetzes identifizierenden Daten und/oder das mobile Endgerät (UE) identifizierenden Daten für die Kennung und/oder seitens der Kennung.

4. Verfahren nach einem der Ansprüche 1 bis 3, **dadurch gekennzeichnet, dass** nach einem Aufbau einer Kommunikationsverbindung wenigstens ein Kommunikationsparameter der Kommunikationsverbindung bestimmt wird, anhand dessen wenigstens eine Information hinsichtlich des Aufenthalts des mobilen Endgerätes (UE) in dem Vorzugsgebiet ermittelbar ist.

5. Verfahren nach Anspruch 4, **dadurch gekennzeichnet, dass** seitens der Basisstation (Node B) ein zulässiger Wertebereich des Kommunikationsparameters für die Kommunikationsverbindung erfasst ist und überprüft wird, ob der bestimmte Kommunikationsparameter der Kommunikationsverbindung in dem zulässigen Wertebereich des Kommunikationsparameters für die Kommunikationsverbindung liegt.

6. Verfahren nach der Anspruch 5, **dadurch gekennzeichnet, dass** bei positiver Überprüfung die Kommunikationsverbindung aufrechterhalten wird.

7. Verfahren nach Anspruch 5, **dadurch gekennzeichnet, dass** bei negativer Überprüfung die Kommunikationsverbindung abgebaut wird oder die Kommunikationsverbindung auf eine Kommunikationsverbindung gemäß Restgebiet geschaltet wird.

8. Mobilfunksystem mit ein zellulares Mobilfunknetz ausbildenden Einrichtungen (Node B, SGSN) und darin betreibbaren mobilen Endgeräten (UE), **dadurch gekennzeichnet, dass** die das Mobilfunknetz ausbildenden Einrichtungen (Node B, SGSN) und die darin betreibbaren mobilen Endgeräte (UE) zur Ausführung eines Verfahrens nach einem der Ansprüche 1 bis 7 ausgebildet sind.

## Claims

1. A method for controlling communication connections of mobile terminals (UE) that are operable in a mobile radio network according to the UMTS radio network standard, wherein the mobile radio network comprises at least one service area comprising a cellular network structure composed of radio cells, the service area for at least one mobile terminal (UE) is divided into at least one preferred area and one remaining area and if the mobile terminal (UE) is present in the at last one preferred area for communication connections, a use of at least one service will be enabled, which use is different from the use of services enabled for communication connections, if the mobile terminal is present in the remaining area,
**characterized in that**
if the mobile terminal (UE) is placed in the preferred area, a communication connection will be established under exclusion of radio cell transfer functionalities using radio network controlling (RNC) resources of a mobility management of mobile terminals of the mobile radio network,
and
that if a communication connection is established, an identifier will be signalized by the mobile terminal (UE) to at least one base station (node B) of the mobile radio network, which base station forms at least one radio cell of the preferred area, and the communication connection to be established will be forwarded by the base station (node B) on the basis of the identifier, wherein an identifier of the preferred area is recorded by the base station (node B) and the recorded identifier will be compared with the signalized identifier and if the recorded identifier and the signalized identifier coincide, the communication connection to be established will be directly forwarded via a direct connection (A) without using RNC resources between the base station (node B) and the switching station (SGSN) associated to this one of the mobile radio network.

2. A method according to claim 1, **characterized in that** the identifier signalizes the presence of the mobile terminal (UE) in the preferred area to the base station (node B).

3. A method according to claim 1 or claim 2, **characterized by** a use of data which identify the user of the mobile terminal (UE) by means of the mobile radio network and/or data which identify the mobile terminal (UE) for the identifier and/or by the identifier.

4. A method according to one of the claims 1 to 3, **characterized in that** after a communication connection has been established, at least one communication parameter of the communication connection will be determined, on the base of which at least one information item with respect to the presence of the mobile terminal (UE) in the preferred area can be determined.

5. A method according claim 4, **characterized in that** an admissible range of values of the communication parameter is recorded for the communication connection by means of the base station (node B), and it will be checked whether the determined communication parameter of the communication connection is comprised within the admissible range of values of the communication parameter of the communication connection.

6. A method according to claim 5, **characterized in that** if the check is positive, the communication connection will be maintained.

7. A method according to claim 5, **characterized in that** if the check is negative, the communication connection will be established or the communication connection will be switched to a communication connection according to the remaining area.

8. A mobile radio system comprising devices (node B, SGSN) forming a cellular mobile radio network and mobile terminals (UE) which can be operated in this one, **characterized in that** the devices (node B, SGSN) forming the mobile radio network and the mobile terminals (UE) operable in this one are configured for carrying out a method according to one of the claims 1 to 7.

## Revendications

1. Procédé de commande de liaisons de communication de terminaux mobiles (UE) fonctionnant dans un réseau radio mobile selon le standard de réseau radio UMTS, le réseau radio mobile comprenant au moins une zone de service comprenant une structure de réseau cellulaire composée de cellules radio, la zone de service pour au moins un terminal mobile (UE) étant divisée en au moins une zone de préférence et en une zone résiduelle et si le terminal mobile (UE) est présent dans l'au moins une zone de préférence de liaisons de communication, une utilisation d'au moins un service sera rendue possible, laquelle utilisation est différente de l'utilisation de services rendue possible pour des liaisons de communication, si le terminal mobile est présent dans la zone résiduelle,
**caractérisé en ce que**
si le terminal mobile (UE) est présent dans la zone de préférence, une liaison de communication sera établie à l'exclusion des fonctionnalités de transfert de cellules radio utilisant des ressources de contrôle de réseau radio (RNC) d'une gestion de mobilité de terminaux mobiles du réseau radio mobile,
et
**que** si une liaison de communication est établie, un identificateur sera signalé par le terminal mobile (UE) à au moins une station de base (noeud B) du réseau radio mobile, ladite station de base formant au moins une cellule radio de la zone de préférence, et la liaison de communication à établir sera transférée par la station de base (noeud B) sur la base de l'identificateur, un identificateur de la zone de préférence étant saisi par la station de base (noeud B), et l'identificateur saisi sera comparé à l'identificateur signalé et si l'identificateur saisi et l'identificateur signalé coïncident, la liaison de communication à établir sera directement transférée via une liaison directe (A) sans utiliser des ressources RNC entre la station de base (noeud B) et la centrale téléphonique (SGSN) associée à ladite station de base du réseau radio mobile.

2. Procédé selon la revendication 1, **caractérisé en ce que** l'identificateur signale la présence du terminal mobile (UE) dans la zone de préférence à la station de base (noeud B).

3. Procédé selon la revendication 1 ou la revendication 2, **caractérisé par** une utilisation de données, qui identifient l'utilisateur du terminal mobile (UE) par moyen du réseau radio mobile et/ou de données, qui identifient le terminal mobile (UE) pour l'identificateur et/ou par l'identificateur.

4. Procédé selon l'une des revendications 1 à 3, **caractérisé en ce qu'**après l'établissement d'une liaison de communication au moins un paramètre de communication de la liaison de communication sera déterminé, sur la base duquel au moins une information par rapport à la présence du terminal mobile (UE) dans la zone de préférence peut être déterminée.

5. Procédé selon la revendication 4, **caractérisé en ce qu'**une plage de valeurs admissible du paramètre de communication est enregistrée pour la liaison de communication par moyen de la station de base (noeud B) et il sera vérifié si le paramètre de communication déterminé de la liaison de communication est compris dans la plage de valeurs admissible du paramètre de communication de la liaison de communication.

6. Procédé selon la revendication 5, **caractérisé en ce que** si la vérification est positive, la liaison de communication sera maintenue.

7. Procédé selon la revendication 5, **caractérisé en ce que** si la vérification est négative, la liaison de communication sera établie ou la liaison de communication sera commutée à une liaison de communication selon la zone résiduelle.

8. Système de radio mobile comprenant des dispositifs (noeud B, SGSN), qui forment un réseau radio mobile cellulaire, et des terminaux mobiles (UE) fonctionnant dans celui-ci, **caractérisé en ce que** les dispositifs (noeud B, SGSN), qui forment le réseau radio mobile cellulaire, et les terminaux mobiles (UE) fonctionnant dans celui-ci sont configurés pour exécuter un procédé selon l'une des revendications 1 à 7.
